# EUROPEAN PATENT APPLICATION

(11) **EP 0 583 970 A1**
(43) Date of publication of application: **23.02.1994**
(21) Application number: 93306465.1
(22) Date of filing: 17.08.1993
(51) Int. Cl.: B01J 29/32, B01J 29/36, C10G 45/64, C10G 35/095

(54) **Hydroisomerization process using catalysts based on noble metal ECR-1 or mazmorite zeolites**

(30) Priority: 19.08.1992 US 932436
(71) Applicant: EXXON RESEARCH AND ENGINEERING COMPANY, Florham Park, New Jersey 07932-0390 (US)
(72) Inventor: Vaughan, David Evan William, Flemington, New Jersey 08822 (US); Van Oorschot, Cornelis Wilhelmus Maria, NL-3181 PG Rozenburg (NL); Strohmaier, Karl Gottlieb, Port Murray, New Jersey 07865 (US)
(74) Representative: Somers, Harold Arnold

(57) **Abstract**

Noble metal containing ECR-1 or mazmorite compositions are effective catalysts for the hydroisomerization of n-paraffins to branched paraffins. They show a strong selectivity to mono-branched products, with excellent selectivity at high conversion levels.

## Description

### Field of the Invention

The invention is directed to a noble metal-containing ECR-1 or mazmorite catalyst composition, optionally containing rhenium, which is useful for the hydroisomerization of n-paraffins to branched paraffins. The stability of the hydroisomerized product distributions at high hydroisomerizing temperature in the presence of these catalysts makes them particularly useful as co-catalysts in fluid catalytic cracking processing. The invention also comprises a hydroisomerizing process employing the said compositions as catalysts.

Applicants have discovered that a noble metal-containing ECR-1 or mazmorite catalyst composition (optionally containing rhenium, in addition), provides superior activity and selectivity than previous catalysts used in hydroisomerization of n-paraffin-containing feeds, particularly at high conversion levels over 50%, and higher temperatures. Simultaneously, the amount of undesirable cracked hydrocarbons such as propane, butane, isobutane and isopentane, typically produced in isomerization reactions, is reduced. As herein used, ECR-1 denotes a crystalline zeolite as disclosed in U.S. patent 4,657,748, and mazmorite a crystalline zeolite as disclosed in U.S. patent 4,892,721.

### Background of the Invention

Several catalyst compositions and catalytic methods have been used for the isomerization of hydrocarbons. Many have required high temperatures, expensive or hard-to-handle catalysts, expensive or hard-to-handle equipment, or complex recovery and recycle procedures for carrying out extensive isomerization. The commercial catalysts used in the isomerization of hydrocarbons include aluminum halides, hydrogen fluoride, sulfuric acid and the like. It has long been recognized that sulfuric acid and halide-containing catalysts may cause environmental problems, because in many instances they are highly corrosive and not easily disposed of.

The use of various noble metal zeolites in paraffin isomerization is well-known and long established (see for a review, Bolton, in "Zeolite Chemistry and Catalysis," ACS Monogr. 171, (1976) p. 714, Ed. Rabo) with high silica mordenite being a preferred zeolite (US patent 3,475,345). The trend toward liquid transportation fuels is away from aromatics and olefins because of environmental concerns. Hence, the major octane source in gasoline must be replaced by a more environmentally acceptable high octane component such as branched paraffins. Hydroisomerization is a major source of branched paraffins, and selective catalysts are highly desirable.

The noble metal-containing ECR-1 or mazmorite catalyst composition has superior specificity toward high yields of C₆ isomers at high conversion levels with low cracking activity and excellent aging resistance when utilized in the hydroisomerization process. It is particularly selective at higher temperatures where it is useful for isomerizing paraffins in processes such as FCC in a co-catalyst mode.

### Summary of the Invention

The present invention provides a catalyst composition which is useful in processes for the hydroisomerization of n-paraffins-containing feeds. The catalyst composition of the invention comprises a zeolite support selected from ECR-1 and mazmorites and a metal selected from the group consisting of Group VIII noble metals, mixtures of Group VIII noble metals, and one or more Group VIII noble metals and rhenium. The invention also provides a process for hydroisomerization of n-paraffins in feedstocks by contacting the feedstocks under hydroisomerization conditions with the said catalyst compositions.

### Detailed Description of the Invention

The catalyst of the present invention is prepared by either utilizing a crystalline zeolite ECR-1 obtained using the general procedure of U.S. patent 4,567,748, herein incorporated by reference, or any other procedure for preparing ECR-1; or by preparing a mazmorite using the methods of U.S. patent 4,892,721, herein incorporated by reference, or any other methods for preparing mazmorite materials; and exchanging or impregnating thereon, at least one metal selected from the group consisting of Group VIII noble metals, rhenium, and mixtures thereof. Techniques for such impregnation and exchange of the noble metal are well-known to those skilled in the art.

The Group VIII noble metals which may be used are preferably selected from the group consisting of platinum, ruthenium, palladium, iridium, and mixtures thereof, with platinum or palladium being preferred. Rhenium may also be present on the catalyst.

The "as synthesized" chemical compositions of ECR-1 and the mazmorites may be stoichiometrically expressed in terms of mole ratios of oxides as follows:

0.02 to 0.1 R₂O : 0.90 to 0.98 Na₂O : Al₂O₃ : 5 to 20 SiO₂· xH₂O

where R is a bis-(2-hydroxyethyl)- or bis-(2-hydroxypropyl)-dimethylammonium or similar cation and x is 0 or an integer from 1 to 8. The zeolites herein are also characterized by having a structure indicated by x ray powder diffraction patterns having the main peaks given in Table IIbelow. The materials trap organic cation molecules, such as the dimethyl- or diethyl-ammonium species, and these must be removed prior to their use as catalysts. The most convenient method is to oxidize them at a high temperature, usually by calcining said materials in air at temperatures between 350° and 600°C. A general method for preparing ECR-1 or mazmorites is as follows:
(a) preparing a reaction mixture comprising an oxide of sodium, an organic ammonium salt, water, a source of silica, a source of alumina and sodium aluminosilicate nucleating seeds, said reaction mixture having a composition, in terms of mole ratios of oxides, within the following ranges:

| | | | |
|---|---|---|---|
| R₂O:Al₂O₃ | 0.2 | to | 1.0 |
| Na₂O:Al₂O₃ | 1 | to | 7 |
| SiO₂:Al₂O₃ | 5 | to | 20 |
| H₂O:Al₂O₃ | 120 | to | 300 |
| R₂O:Na₂O | 0.05 | to | 0.4 |

where R represents a tetraalkyl ammonium cation of the type (CH₃)₂R₂¹N where R¹ is an ethyl, propl or butyl grouping; especially where R is a bis-(2-hydroxypropyl)- or a bis-(2-hydroxyethyl) dimethyl-ammonium or like group. Seeds may be present in an amount sufficient to yield 0.1 to 20.0 mole percent of the total final alumina content in the zeolite synthesis slurry;
(b) blending the reaction mixture sufficiently to form a substantially homogeneous mixture;
(c) maintaining the reaction mixture at between about 120 and 200°C under autogenous pressure for a sufficient period of time to form crystals of the zeolite ECR-1, or mazmorites, having the composition first described above; and
(d) recovering the zeolite crystals;
(e) calcining in air or oxygen to remove organic species trapped in the cavities and channels of the zeolite.

The residual cations in the zeolite are then exchanged with an ammonium salt, followed by exchange with noble metal salts, such as ammonium platinate or palladium chloride. Impregnation is an alternate method well known in the art.

The ECR-1 zeolite or mazmorite used in this invention may be at least partially dehydrated by drying at temperatures of up to about 500°C or more until most or all of the water of hydration is removed along with the trapped organic cations.

The product has a composition in the SiO₂:Al₂O₃ range of 5 to 12. Suitable methods of dealumination may further increase this ratio above 12 (see, for example, J. Scherzer, Catal. Rev. - Sci. Engr. v. 31(3), p 233, (1989), for a review of such method) such as acid treatments, steam treatments, exchange with acidic halides in the vapor phase, solution exchange with ammonium silicon hexafuoride, ammonium bifluoride, or organic solvent exchange with Si X₄(X=F,Cl,Br,I). Such higher silica materials of this invention are particularly useful when used in processes using severe deactivation or regeneration conditions, such as the use as a co-catalyst in fluid catalytic cracking.

The relative amount of Group VIII noble metal exchanged or impregnated onto the ECR-1 or mazmorite support ranges from 0.05% to 5%. Preferably 0.1% to 0.6% based on the weight of ECR-1 or mazmorite.

The isomerization process is preferably carried out at temperatures at or below about 400°C. Preferably, the reaction is carried out at temperatures between about 200°C and 400°C. The reaction pressure ranges from about 100 kPa to about 3000 kPa and more preferably ranges from about 100 kPa to about 500 kPa. The weight hourly space velocity (WHSV) ranges from 1 (wt feed/wt catalyst/hour) to 20 (wt feed/wt catalyst/hour). The mole ratio of hydrogen to paraffin feed ranges from about 0.1 to about 10.

Apparatus useful for carrying out the present hydroisomerization process may be selected from conventional laboratory, pilot plant, or full industrial scale equipment. The process may be carried out batch or continuous, preferably a continuous, fixed bed operation will be used.

The feed comprises normal paraffins, Cₙ or Cₙ+ paraffins, where n=5 or 6, preferably C₅ to C₈ paraffins. Particularly useful is the addition of an isomerization catalyst to a fluid cracking catalyst as a cocatalyst. The stability of the product distributions at high temperature over ECR-1 and mazmorite make these catalysts particularly useful as cocatalysts in fluid catalytic cracking processing.

The advantages to be gained from the isomerization of n-paraffins are apparent from Table I. Table I illustrates the octane increase obtained from the isomerization of n-pentane and n-hexane.

**TABLE I**

| Hydrocarbon | Research Octane | Motor Octane |
|---|---|---|
| n-pentane | 62 | 62 |
| i-pentane | 92 | 90 |
| n-hexane | 25 | 26 |
| 2-methylpentane | 73 | 74 |
| 3-methylpentane | 75 | 74 |
| 2,2-dimethylbutane | 92 | 93 |
| 2,3-dimethylbutane | 103 | 94 |

The following examples illustrate the invention and are not limiting in any way.

### Example 1

Synthesis of methyltriethanolammonium ECR-1 was done from a gel stoichiometry of:

0.6((EtOH)₃MeN)₂O: 1.35Na₂O: A1₂O3: 7.5SiO₂: 120H₂O: (1.71Na₂SO₄)

by first making a sodium aluminate solution by dissolving 8.0 g aluminum oxide trihydrate in a solution containing 6.24 g NaOH and 15 ml H₂O. After cooling down, the solution was diluted to 26 g with distilled H₂O. In a 200 ml blender were mixed 74.9 g of sodium silicate (P.Q. Corp., N brand, 28.7% SiO₂:8.9% Na₂O) and 6.4 g of a "seed" solution (13.33 Na₂O: A1₂O3: 12.5 SiO₂: 267 H₂O, see U.S. Patent Nos. 3,574,538 and 4,340,573). Blended into this silicate solution were 26.8 g of 40% aq. methyltriethanolammonium hydroxide (made by boiling down 42.9 g of 25% solution; Southwestern Analytical Chem. Inc.), 10.2 g sodium aluminate solution, and 18.2 g A1₂(SO₄)₃·17H₂O dissolved in 22.7 g H₂O. The total weight of the mixture was adjusted to 160 g by addition of H₂O, and then thoroughly homogenized. It was placed in a stainless steel autoclave and reacted at 150°C for 4 days. The product was filtered, washed with distilled H₂O, and dried at 115°C. X-ray powder diffraction analysis showed the crystalline phase to be pure ECR-1. See Table II. Elemental analysis by ICP-AES* gave 7.55% A1; 28.3% Si: 6.54% Na which corresponds to a product composition of:

1.02 Na₂O: A1₂O3: 7.2 SiO₂

The sample of ECR-1 absorbed 4.7% n-hexane at 50 torr and 3.7% mesitylene at .8 torr after calcination at 600°C. Thermogravimetric analysis showed a water loss of 13.4%.
*Inductively coupled plasma-atomic emission spectroscopy.

### Example 2

Synthesis of methyltriethanolammonium ECR-1 from a gel stoichiometry of:

0.8((EtOH)₃MeN)₂O: 1.8Na₂O: A1₂O3: 10SiO₂: 150H₂O

was achieved by first making a sodium aluminate solution by dissolving 9.44 g of sodium aluminate (Fisher; 1.14 Na₂O:A1₂O3·4H₂O) in a solution containing 1.14 g NaOH and 25 ml H₂O. In a 200 ml blender were mixed 57.6 g of 40% colloidal silica (duPont Ludox HS-40) and 6.42 g of a "seed" solution (13.33 Na₂O: A1₂O3: 12.5 SiO₂: 267 H₂O, see U.S. Patent Nos. 3,574,538 and 4,340,573). Swirled in 45.9 g of 25% aq. methyltriethanolammonium hydroxide (Southwestern Analytical Chem. Inc.), sodium aluminate solution, and 18.2 g A1₂(SO₄)₃·17H₂O dissolved in 22.7 g H₂O. The total weight of the mixture was adjusted to 150 g by addition of H₂O, and then thoroughly homogenized. It was placed in a stainless steel autoclave and reacted at 150°C for 4 days. The product was filtered, washed with distilled H₂O, and dried at 115°C oven. X-ray powder diffraction analysis showed the crystalline phase to be ECR-1 and a minor mordenite impurity.

### Example 3

Synthesis of methyltriethanolammonium ECR-1 from a gel stoichiometry of:

0.6((EtOH)₃MeN)₂0:1.05Na₂O:.3 K₂O:A1₂O₃:7.5SiO₂:120H₂O:(1.71Na₂SO₄)

was achieved by first making a sodium aluminate solution by dissolving 2.62 g aluminum oxide trihydrate in a solution containing 1.05 g NaOH, 1.60 g KOH·5H₂O and 5 ml H₂O. In a 250 ml plastic beaker were mixed 62.2 g of sodium silicate (P.Q. Corp., N brand, 28.7% SiO₂:8.9% Na₂O) and 5.32 g of a "seed" solution (13.33 Na₂O: A1₂O₃: 12.5 SiO₂: 267 H₂O, see U.S. Patent Nos. 3,574,538 and 4,340,573), followed by 22.3 g of 40% aq. methyltriethanolammonium hydroxide (made by boiling down 35.7 g of 25% solution; Southwestern Analytical Chem. Inc.), the above sodium aluminate solution, and 15.2 g A1₂(SO₄)₃·17H₂O dissolved in 17.9 g H₂O. The total weight of the mixture was adjusted to 134 g by addition of H₂O, and then thoroughly homogenized. The gel was placed in a stainless steel autoclave and reacted at 150°C for 4 days. The product was filtered, washed with distilled H₂O, and dried at 115°C. X-ray powder diffraction analysis gave a pattern similar to that listed in Table II, indicating the crystalline phase to be pure ECR-1. This sample of ECR-1 absorbed 4.0% n-hexane at 45 torr. Thermogravimetric analysis showed a water loss of 14.5%.

**TABLE II**

| h | k | 1 | 2-theta | d(A) | Relative Intensity |
|---|---|---|---|---|---|
| 1 | 1 | 0 | 5.92 | 14.9 | 14 |
| 1 | 2 | 0 | 8.31 | 10.6 | 21 |
| 2 | 0 | 0 | 9.72 | 9.10 | 100 |
| 1 | 3 | 0 | 11.24 | 7.87 | 45 |
| 1 | 0 | 1 | 13.07 | 6.77 | 94 |
| 1 | 1 | 1 | 13.41 | 6.60 | 5 |
| 3 | 1 | 0 | 14.99 | 5.91 | 22 |
| 2 | 1 | 1 | 15.85 | 5.59 | 8 |
| 2 | 4 | 0 | 16.63 | 5.33 | 5 |
| 3 | 3 | 0 | 17.77 | 4.987 | 10 |
| 1 | 4 | 1 | 18.72 | 4.736 | 8 |
| 3 | 4 | 0 | 19.98 | 4.440 | 16 |
| 1 | 6 | 0 | 21.03 | 4.221 | 30 |
| 3 | 4 | 1 | 23.39 | 3.800 | 52 |
| 1 | 6 | 1 | 24.18 | 3.678 | 24 |
| 1 | 0 | 2 | 24.83 | 3.583 | 7 |
| 5 | 2 | 0 | 25.44 | 3.498 | 98 |
| 4 | 5 | 0 | 26.02 | 3.422 | 15 |
| 0 | 8 | 0 | 27.43 | 3.249 | 53 |
| 2 | 3 | 2 | 28.12 | 3.171 | 87 |
| 2 | 8 | 0 | 29.09 | 3.067 | 4 |
| 2 | 4 | 2 | 29.64 | 3.011 | 22 |
| 5 | 4 | 1 | 30.66 | 2.913 | 76 |
| 2 | 9 | 0 | 32.24 | 2.774 | 3 |
| 1 | 9 | 1 | 33.44 | 2.677 | 11 |
| 1 | 7 | 2 | 34.63 | 2.588 | 12 |
| 5 | 3 | 2 | 36.24 | 2.477 | 13 |
| 1 | 2 | 3 | 37.78 | 2.379 | 7 |
| 1 | 9 | 2 | 39.82 | 2.262 | 12 |

### Example 4

Using the general procedure of U.S. patent 4,657,748 ECR-1 was synthesized using a gel composition of 0-6(E₂M₂)₂O: 1.35 Na₂O: Al₂O₃: 7.5 SiO₂: 120H₂O: 0.26Na₂SO₄ obtained by mixing together 36.24 gm. Ludox HS-40 colloidal silica (Dupont Co.) 31.78 gm. 19% aqueous solution of bis-(2-hydroxyethyl) dimethylammonion hydroxide (E₂M₂) (Southwestern Analytical Chemicals, Inc.), 15.47 gm. (30% alumina) sodium aluminate solution (from a stock solution made from 150 gm. Al₂O₃·3H₂O, 117.7 gm. NaoH and 232.3 gm. H₂O), 3.71 gm. 50% aqueous solution of alum (Al₂(SO₄)₃.17H₂O), and 4.32 gm. of a seed solution of composition 13.33 Na₂O:Al₂O₃:12.5SiO₂:267H₂O (U.S. patent 4,340,573). The gel was reacted in a Teflon lined autoclave at 160°C for 3 days. 16 gm. of the recovered oven dried and calcined (550°C/3 hrs) ECR-1 was exchanged twice with a solution of 20 gm. NH₄Cl in 160 gm. H₂O at 60°C for one hour. After washing with 1 liter of distilled water, the ECR-1 was oven dried at 110°C for 1 hr. then calcined for 2 hours at 400°C. This product was reexchanged once with the NH₄Cl solution described above, then calcined for 2 hours at 350°C to convert it to the proton form. This sample was then exchanged with a solution of 0.16 Pt(NH₃)₄Cl₂ gm dissolved in 40 ml. aqueous ammonia (29% NH₃) for 1 hr. at 23°C, filtered, washed with 50 ml. distilled water on the filter then dried at 110°C for 16 hrs. This sample was then formed into one inch tablets in a Carver Press and these were then crushed and sieved to a particle size range of 0.2 to 0.4 mm. The sample was then placed in a vacuum oven at 50°C, ramped to 250°C in one hour, and held at 250°C for one hour, at which time the temperature was reduced to 150°C. 4 gm. of this catalyst was weighed into a dish and placed in a dessicator containing 3A (i.e., K-LTA) molecular sieves.

This 4 gm. catalyst sample was then loaded into a 0.5 inch diameter stainless steel reactor, and topped to 12 cm. bed depth with 0.1 to 0.2 mm diameter glass beads. Reactor start-up procedures ramped the temperature to 454°C at a rate of 3°C/minute under a hydrogen flow rate of 100 ml/min. STP (10 barG. pressure), and held the reactor at this temperature for 15 minutes before reducing the temperature to the operational temperature. At this time the n-hexane feed was introduced into the hydrogen stream to give an n-hexane equivalent space velocity (WHSV) of 2, a H₂/n-hexane of 2.5, and a pressure of 10 barG. Samples were recovered and analyzed on line by gas chromatography at appropriate times. These results are shown in Table III, demonstrating excellent i-C6 yields, low gas and no coking tendency, as indicated by excellent activity/selectivity maintenance at long times on oil. Clearly this catalyst has good octane upgrading properties.

### Example 5

A sample of ECR-1 made in a similar manner to Example 4 but using a triethanolmethylammonium (E₃M) template and a gel composition: 0.6(E₃MN)₂O:0.3K₂O:1.05Na₂O:Al₂O₃:7.5SiO₂:120H₂O made by mixing together 62.2 gm. sodium silicate solution (N brand, P.Q. Corp.), 5.32 gm. seed solution, aluminate solution (2.62gm. Al₂O₃·3H₂O+1.05gm. NaOH+1.60gm. KOH·1/2H₂O+5gm. H₂O), 22.3 gm. 40% aqueous solution of triethanol-methylammonium hydroxide, and 15.2 g Al₂(SO₄)₃·17H₂O in 18 ml H₂O. Divided between two test-tube autoclaves, the catalyst sample was made from one run for 4 days at 150°C. 9 gm. of this oven dried product was ammonium exchanged in an identical manner (proportionately) to the ECR-1 of Example 1. Platinum exchange, catalyst preparation, and reactor set-ups were identical to the procedures described in Example 4. Catalytic hydroisomerization results are shown in Table IV, and confirm the particularly excellent selectivity maintenance at high conversion levels when high cracking rates are to be expected. ECR-1 shows low gas selectivity under these conditions, maintaining excellent i-C6 isomer yields.

Noble metal exchanged or impregnated ECR-1 and analogous mazmorite materials are here shown to have desirable and important activity in the hydroisomerization of n-paraffins, particularly at high conversion levels over 50%.

**TABLE III**

| | | | | | | |
|---|---|---|---|---|---|---|
| Temperature C | 360 | 360 | 380 | 380 | 370 | 370 |
| Time on Oil | 6 hr | 21 hr | 25 hr | 53 hr | 55 hr | 90 hr |
| Conversion (w%) | 27.43 | 40.74 | 66.81 | 76.26 | 71.38 | 74.71 |
| C1 | 0.31 | 0.26 | 0.32 | 0.32 | 0.27 | 0.28 |
| C2 | 0.4 | 0.32 | 0.42 | 0.46 | 0.37 | 0.38 |
| C3 | 1.26 | 1.18 | 2.38 | 3.62 | 2.53 | 2.81 |
| i-C4 | 0.09 | 0.11 | 0.31 | 0.56 | 0.37 | 0.46 |
| n-C4 | 0.69 | 0.54 | 0.64 | 0.71 | 0.59 | 0.62 |
| i-C5 | 0.16 | 0.19 | 0.45 | 0.68 | 0.47 | 0.58 |
| n-C5 | 0.77 | 0.56 | 0.54 | 0.5 | 0.44 | 0.46 |
| 2,2-DMB | 0.7 | 1.97 | 7.08 | 10.62 | 8.99 | 10.36 |
| 2,3-DMB | 0.85 | 1.8 | 4.73 | 6.41 | 5.59 | 6.23 |
| 2-MeC5 | 12.71 | 19.48 | 28.68 | 30.04 | 30 | 30.44 |
| 3-MeC5 | 8.85 | 13.72 | 20.32 | 21.33 | 21.13 | 21.48 |
| n-C6(feed) | 72.57 | 59.26 | 33.19 | 23.74 | 28.62 | 25.29 |
| Mecyclo-C5 | 0.52 | 0.51 | 0.63 | 0.53 | 0.47 | 0.45 |
| Benzene | 0.08 | 0.07 | 0.25 | 0.23 | 0.12 | 0.12 |
| cyclo-C6 | 0.07 | 0.06 | 0.07 | 0.07 | 0.06 | 0.06 |

**TABLE IV**

| | | | | | | | | |
|---|---|---|---|---|---|---|---|---|
| Temperature C | 360 | 360 | 360 | 380 | 380 | 370 | 370 | 370 |
| Time on Oil | 7 hr | 14 hr | 20 hr | 24 hr | 50 hr | 56 hr | 68 hr | 90 hr |
| Conversion(w%) | 45.67 | 54.32 | 59.71 | 77.26 | 80.69 | 79.46 | 80.52 | 81.26 |
| C1 | 0.59 | 0.33 | 0.44 | 0.5 | 0.38 | 0.33 | 0.55 | 0.62 |
| C2 | 0.7 | 0.43 | 0.52 | 0.71 | 0.74 | 0.54 | 0.94 | 1.07 |
| C3 | 2.76 | 1.97 | 2.61 | 4.86 | 6.73 | 4.96 | 7.92 | 8.82 |
| i-C4 | 0.21 | 0.2 | 0.28 | 0.67 | 1.18 | 0.89 | 1.39 | 1.57 |
| n-C4 | 0.99 | 0.79 | 0.85 | 1.12 | 1.35 | 1.06 | 1.3 | 1.42 |
| i-C5 | 0.26 | 0.29 | 0.33 | 0.78 | 1.27 | 0.92 | 1 | 1.16 |
| n-C5 | 0.63 | 0.5 | 0.48 | 0.61 | 0.76 | 0.56 | 0.57 | 0.64 |
| 2,2-DMB | 2.7 | 4.62 | 5.73 | 10.9 | 12.21 | 12.36 | 11.92 | 11.84 |
| 2,3-DMB | 2.19 | 3.26 | 3.81 | 6.32 | 6.83 | 6.83 | 6.54 | 6.55 |
| 2-MeC5 | 20.8 | 24.44 | 26.07 | 29.44 | 28.59 | 29.93 | 28.45 | 27.84 |
| 3-MeC5 | 13.83 | 16.84 | 17.95 | 20.28 | 19.69 | 20.42 | 19.4 | 19.17 |
| n-C6(feed) | 54.33 | 45.68 | 40.29 | 22.74 | 19.31 | 20.54 | 19.48 | 18.74 |
| Mecyclo-C5 | 0.56 | 0.52 | 0.48 | 0.61 | 0.48 | 0.38 | 0.34 | 0.34 |
| Benzene | 0.14 | 0.14 | 0.12 | 0.39 | 0.43 | 0.23 | 0.22 | 0.23 |
| cyclo-C6 | 0.05 | 0 | 0.05 | 0.06 | 0.05 | 0.04 | 0 | 0 |

## Claims

1. A catalyst composition comprising a crystalline zeolite support selected from the group consisting of ECR-1 and mazmorites, and a metal selected from the group consisting of Group VIII noble metals, mixtures of Group VIII noble metals, and mixtures of one or more Group VIII noble metals and rhenium.

2. The composition of claim 1 wherein said Group VIII noble metal is selected from the group consisting of platinum, ruthenium, palladium, iridium and mixtures thereof.

3. The composition of claim 1 or claim 2 wherein said Group VIII noble metal is platinum.

4. The composition of any one of claims 1 to 3 wherein said Group VIII noble metal is palladium.

5. A process for the hydroisomerization of C₅+ normal paraffinic feedstock which comprises contacting the said feedstock under hydroisomerization conditions with a catalyst composition in accordance with any one of claims 1 to 4.
